# EUROPEAN PATENT APPLICATION

(11) **EP 4 647 937 A1**
(43) Date of publication of application: **12.11.2025**
(21) Application number: 23914506.3
(22) Date of filing: 19.12.2023
(51) Int. Cl.: G06F 16/29

(54) **MAP DATA UPDATING METHOD, APPARATUS, AND CLEANING SYSTEM**

(30) Priority: 03.01.2023 CN 202310002809
(71) Applicant: Beijing Roborock Innovation Technology Co., Ltd., Beijing 102206 (CN)
(72) Inventor: SUN, Jianbin, Beijing 102206 (CN); XIAO, Fujian, Beijing 102206 (CN); PAN, Yafeng, Beijing 102206 (CN); CHEN, Youzi, Beijing 102206 (CN); CONG, Yiming, Beijing 102206 (CN)
(74) Representative: Haseltine Lake Kempner LLP
(86) International application number: PCT/CN2023/139908
(87) International publication number: WO 2024/146373

(57) **Abstract**

Embodiments of the present application relate to the technical field of smart home. Disclosed are a map data updating method, an apparatus, and a cleaning system. According to the map data updating method, map data change summary information can be determined on the basis of current map data information and cached map data information, and the map data change summary information can be sent; when receiving the map data change summary information, a mobile terminal can learn which map data of smart home devices has changed; the mobile terminal can send map data updating request information; and changed map data can be sent to the mobile terminal when the map data updating request information is received. The map data updating method reduces the sending amount of map data, can reduce the continuity requirement of map data updating for the network bandwidth and the transfer cache of a server, and can make the changed map data sent more targeted, thereby improving user experience.

## Description

This application claims the priority of the Chinese patent application No. 202310002809.7 filed with the Chinese Patent Office on January 3, 2023, titled "METHOD FOR UPDATING MAP DATA, APPARATUS AND CLEANING SYSTEM", all the contents of which are incorporated by reference in this application.

### TECHNICAL FIELD

Embodiments of the present application relate to the field of smart home technologies, and in particular to a method for updating map data, an apparatus and a cleaning system.

### BACKGROUND ART

With the continuous increase of living standards, more and more smart home devices become prevalent in people's daily life. During the use of smart home devices, users can determine the states of the smart home devices by means of mobile terminals. Therefore, the mobile terminals are required to frequently collect data from the smart home devices to achieve data update. The inventors have found that the data updating method in the related art is to package all data and send them to a mobile terminal, such that a large amount of storage spaces are occupied by data update, thereby affecting the data update efficiency and also affecting the performances of the mobile terminal.

### SUMMARY OF THE APPLICATION

A first aspect of the present application provides a method for updating map data.

A second aspect of the present application provides a method for updating map data.

A third aspect of the present application provides a server.

A fourth aspect of the present application provides a mobile terminal.

A fifth aspect of the present application provides a computer-readable storage medium.

A sixth aspect of the present application provides a cleaning system.

In view of this, according to the first aspect of the embodiments of the present application, a method for updating map data is proposed, which is applied to a server side and includes:
determining summary information of map data changes based on current map data information and cached map data information, and sending the summary information of map data changes to a mobile terminal; and
sending changed map data to the mobile terminal in response to map data update request information sent by the mobile terminal.

In a feasible implementation, the step of determining the summary information of map data changes based on the current map data information and the cached map data information includes:
in response to map data change request information sent by the mobile terminal, comparing the current map data information with the cached map data information to determine the changed map data;
determining summary information of the changed map data based on the changed map data; and
summarizing the summary information to acquire the summary information of map data changes;
wherein the summary information includes: map data type information and/or map data change amount information.

In a feasible implementation, the map data type information includes at least one of path information, obstacle information and basic lattice data.

In a feasible implementation, the step of sending the changed map data to the mobile terminal in response to the map data update request information sent by the mobile terminal includes:
responding to the map data update request information sent by the mobile terminal;
determining a type of map data to be updated based on the map data update request information; and
sending the map data corresponding to the type of map data to be updated to the mobile terminal based on the type of map data to be updated.

In a feasible implementation, in a case where the type of map data to be updated includes path data update, the step of sending the map data corresponding to the type of map data to be updated to the mobile terminal based on the type of map data to be updated includes:
in a case where a data volume of path data is greater than a first threshold, sending the path data in multiple times; and
in a case where the data volume of the path data is less than or equal to the first threshold, sending all the path data.

In a feasible implementation, the step of sending the path data in multiple times includes:
storing the path data in slices to acquire a plurality of sub-path information data and first number information of the plurality of sub-path information data;
sending the plurality of sub-path information data in multiple times; and
in a case where the number of sending reaches the first number information, stopping sending the sub-path information data.

In a feasible implementation, in a case where the type of map data to be updated includes obstacle data update, the step of sending the map data corresponding to the type of map data to be updated to the mobile terminal based on the type of map data to be updated includes:
storing a snapshot of currently latest obstacle data to acquire a plurality of sub-obstacle data and second number information of the plurality of sub-obstacle data;
sending the plurality of sub-obstacle data in multiple times; and
in a case where the number of sending reaches the second number information, stopping sending the sub-obstacle data.

In a feasible implementation, in a case where the type of map data to be updated includes basic lattice data, the step of sending the map data corresponding to the type of map data to be updated to the mobile terminal based on the type of map data to be updated includes:
determining a degree of change in the basic lattice data based on the basic lattice data of the current map data information and the basic lattice data of the cached map data information; and
in a case where the degree of change in the basic lattice data exceeds a third threshold, sending all types of map data that have changed to the mobile terminal;
wherein the degree of change in the basic lattice data includes an amount of change in the basic lattice data and/or a rate of change in the basic lattice data.

In a feasible implementation, the method for updating the map data further includes:
updating the current map data information in response to map setting change information received from the mobile terminal.

In a feasible implementation, the method for updating the map data further includes: acquiring the cached map data information, wherein the step of acquiring the cached map data information includes:
in response to map data acquisition request information sent by the mobile terminal, storing a snapshot of the current map data information to acquire the cached map data information; and
sending the cached map data information to the mobile terminal;
wherein the cached map data information includes a snapshot id.

According to the second aspect of the embodiments of the present application, a method for updating map data is proposed, which is applied to a mobile terminal and includes:
receiving summary information of map data changes sent via a server side;
sending map data update request information to the server side; and
receiving changed map data sent via the server side, and updating the map data based on the changed map data.

In a feasible implementation, the summary information of map data changes includes: summarized information of the summary information of the changed map data; and
the map data update request information includes a type of map data to be updated, and the type of map data to be updated is one or more of the plurality of pieces of the summary information.

In a feasible implementation, in a case where the type of map data to be updated includes path data, the map data update request information is sent via an http interface, and the map data update request information includes a starting point of a path change; and/or
the map data update request information is sent every time interval; and/or
the map data change request information is sent every time interval.

In a feasible implementation, the step of receiving the changed map data includes:
in a case where the changed map data being received is path data, determining the number of times the data is received;
in a case where the number of times the data is received reaches first number information, stopping receiving the path data; and/or
in a case where the changed map data being received is obstacle data, determining the number of times the data is received; and
in a case where the number of times the data is received reaches second number information, stopping receiving the obstacle data.

In a feasible implementation, the method for updating the map data further includes:
sending map data acquisition request information to the server side;
receiving cached map data information sent via the server side; and
parsing and displaying the cached map data information;
wherein the cached map data information includes a snapshot id.

In a feasible implementation, the method for updating the map data further includes:
in response to update reminder information issued by the server side, sending the map data acquisition request information; and
receiving the cached map data information.

According to the third aspect of the embodiments of the present application, a server is proposed. The server includes: a memory, configured to store a computer program therein; and
a processor, configured to execute the computer program;
wherein the computer program, when executed by the processor, implements the method for updating the map data provided in the first aspect.

According to the fourth aspect of the embodiments of the present application, a mobile terminal is proposed. The mobile terminal includes:
a memory, configured to store a computer program therein; and
a processor, configured to execute the computer program;
wherein the computer program, when executed by the processor, implements the method for updating the map data provided in the second aspect.

According to the fifth aspect of the embodiments of the present application, a computer-readable storage medium is proposed, wherein
the computer-readable storage medium stores a computer program for implementing the method for updating the map data provided in the first aspect and/or implementing the method for updating the map data provided in the second aspect.

According to the fifth aspect of the embodiments of the present application, a cleaning system is proposed. The cleaning system includes:
the server as described in the above technical solution; and/or
the mobile terminal as described in the above technical solution. The present application includes at least the following beneficial effects. The method for updating the map data provided in the embodiments of the present application may determine the summary information of map data changes based on the current map data information and the cached map data information during operation, and send the summary information of map data changes. In a case that the mobile terminal receives the summary information of map data changes, it can be learnt about which map data of the smart home devices have changed. Further, the mobile terminal may issue the map data update request information. In a case where the map data update request information is received, the changed map data may be sent to the mobile terminal. In this method for updating the map data, the summary information of map data changes is first sent to the mobile terminal, and the mobile terminal may ascertain which map data of the smart home device have changed. Further, the mobile terminal then issues the map data update request information. In a case where the map data update request information is received, the changed map data may be fed back to the mobile terminal in a targeted manner. With such a configuration, on the one hand, during updating of the map data, it is not necessary to package all the map data, but only send a part of the map data that has changed, which reduces the amount of map data being sent, can reduce the continuous requirements of map data update for network bandwidth and server transfer cache, and thus facilitate the map data update. On the other hand, the changed map data is sent only in the case where the map data update request information is received, which can reduce the frequency of map data transmission, and then reduce the frequency at which the mobile terminal requests to the server, such that the request frequency-associated cost and storage space size-associated cost can be greatly reduced. Meanwhile, the frequency at which the mobile terminal parses the map data can be reduced, the performances of the mobile terminal can be improved, and the power consumption and heat generation of the mobile terminal can be reduced. Furthermore, the changed map data is sent based on the map data update request information, so that the changed map data being sent may be adapted to the map data update request information, making the changed map data being sent more targeted and being able to improve the user experience.

### BRIEF DESCRIPTION OF THE DRAWINGS

Various other advantages and benefits will become apparent to a person of ordinary skill in the art upon reading the detailed description of the preferred embodiments below. The accompanying drawings are merely used for the purpose of illustrating the preferred embodiments and are not considered to be limitations of the present application. Moreover, the same reference symbols are used to represent the same components throughout the accompanying drawings. In the accompanying drawings:
FIG. 1 is a schematic flowchart of steps of a method for updating map data according to an embodiment of the present application;
FIG. 2 is a schematic flowchart of steps of a method for updating map data according to another embodiment of the present application;
FIG. 3 is a structural block diagram of a server according to an embodiment of the present application;
FIG. 4 is a structural block diagram of a mobile terminal according to an embodiment of the present application;
FIG. 5 is a structural block diagram of a computer-readable storage medium according to an embodiment of the present application;
FIG. 6 is a structural block diagram of a computer-readable storage medium according to another embodiment of the present application; and
FIG. 7 is a schematic structural diagram of a cleaning system according to an embodiment of the present application.

### DETAILED DESCRIPTION

In order to better understand the above technical solutions, the technical solutions of the embodiments of the present application will be described in detail through the accompanying drawings and specific embodiments. It should be understood that the embodiments of the present application and the specific features in the embodiments are detailed descriptions of the technical solutions of the embodiments of the present application, rather than limitations on the technical solutions of the present application. In the absence of conflict, the embodiments of the present application and the technical features in the embodiments can be combined with each other.

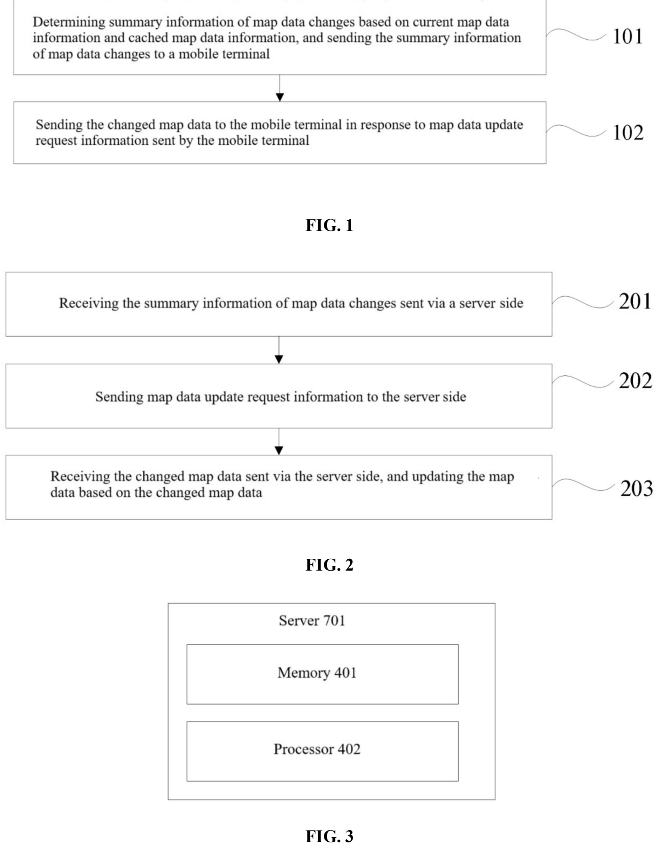

As shown in FIG. 1, a first method for updating map data according to a first aspect of the embodiments of the present application is proposed. The first method includes the following steps.

In Step 101: summary information of map data changes is determined based on current map data information and cached map data information, and the summary information of map data changes is sent to a mobile terminal. It can be understood that the cached map data information is data currently stored or displayed by the mobile terminal, and the current map data information is information acquired after the cached map data information has changed. For example, the current map data information may be data information of a smart home device at the current moment. Further, by comparing the current map data information with the cached map data information, the summary information of map data changes may be determined.

In Step 102: the changed map data is sent to the mobile terminal in response to map data update request information sent by the mobile terminal. It can be understood that after the map data update request information is received, it indicates that the mobile terminal hopes to acquire the updated map data. In this case, the changed map data may be sent to the mobile terminal based on a request for the map data update request information.

A method for updating map data in the conventional technologies will take up a lot of storage space, which will affect the efficiency of updating map data and also the performances of the mobile terminal. Taking a smart cleaning device in the related art as an example, a map of the smart cleaning device and the locations of elements in the map need to be displayed on a mobile terminal that is in communication connection with the smart cleaning device. The elements in the map include but are not limited to charging piles, subarea information, Goto planning paths, area selection, target points, virtual walls, restricted areas (sweeping restricted areas, mopping restricted areas, as well as sweeping and mopping restricted areas), carpets, custom carpets, easy-to-get-stuck points, thresholds, edited thresholds, cliff restricted areas, floor materials, furniture, pile types, floor directions, smart scene area selection, as well as a new map and various changed elements that need to be displayed by the smart cleaning device in time when the map changes. In the related art, a map data update scheme of the smart cleaning device is to package data of each point (5 cm*5 cm) in a map and map data of various sub-elements into a data packet of a private format. When the mobile terminal requests map data from the smart cleaning device, the data packet is transmitted from the smart cleaning device to the mobile terminal at one time, and the mobile terminal parses the data packet into relevant images for display. After that, the mobile terminal starts a timer to request all data packets from the smart cleaning device again at a fixed interval (even if the map has not changed at all), and then parses and displays a new map data packet. This method has continuous requirements for network bandwidth and server transfer cache when users need to view the map data information of the smart cleaning device, which will affect the efficiency of updating map data and also the performances of the mobile terminal.

According to the method for updating the map data provided in the embodiment of the present application, the summary information of map data changes may be determined based on the current map data information and the cached map data information during operation, and the summary information of map data changes is sent. In a case where the mobile terminal receives the summary information of map data changes, it can be learnt about which map data of the smart home device have changed. Further, the mobile terminal may issue the map data update request information. In a case where the map data update request information is received, the changed map data may be sent to the mobile terminal. In this method for updating the map data, the summary information of map data changes is first sent to the mobile terminal, and the mobile terminal may ascertain which map data of the smart home devices have changed. Further, the mobile terminal then issues the map data update request information. In a case where the map data update request information is received, the changed map data may be fed back to the mobile terminal in a targeted manner. With such a configuration, on the one hand, during updating of the map data, it is not necessary to package all the map data, but only send a part of the map data that has changed, which reduces the amount of map data being sent, can reduce the continuous requirements of map data update for network bandwidth and server transfer cache, and thus facilitate the map data update. On the other hand, the changed map data is sent only in a case where the map data update request information is received, which can reduce the frequency of map data transmission, and then reduce the frequency at which the mobile terminal requests to the server, such that the request frequency-associated cost and the storage space size-associated cost can be greatly reduced. Meanwhile, the frequency at which the mobile terminal parses the map data can be reduced, the performances of the mobile terminal can be improved, and the power consumption and heat generation of the mobile terminal can be reduced. Further, the changed map data is sent based on the map data update request information, so that the changed map data being sent may be adapted to the map data update request information, thereby making the changed map data being sent more targeted and being able to improve the user experience.

Taking the method for updating the map data as provided in the embodiment of the present application being applied to a smart home device (e.g., being applied to a cleaning system) as an example, the cleaning system may include a server, a mobile terminal and a cleaning main body. The server is in communication connection with the cleaning main body, and the mobile terminal is in communication connection with the server. The server may learn about map data information of the cleaning main body, while the mobile terminal may learn about the map data information of the cleaning main body through the server. The map data information includes but is not limited to charging piles, subarea information, Goto planning paths, area selection, target points, virtual walls, restricted areas (sweeping restricted areas, mopping restricted areas, as well as sweeping and mopping restricted areas), carpets, custom carpets, easy-to-get-stuck points, thresholds, edited thresholds, cliff restricted areas, floor materials, furniture, pile types, enemies, floor directions, smart scene area selection and other information. The first method for updating the map data as provided in the embodiment of the present application may be adapted to the server. The server may use the data currently displayed and/or stored by the mobile terminal as cached map data information. The server may learn about the current data information of the cleaning main body by being in communication connection with the cleaning main body. With the current map data information and the cached map data information, the server may learn about the map data that has changed in the current map data information compared with the cached map data information. Further, the summary information of map data changes may be determined and sent. After receiving the summary information of map data changes, the mobile terminal may ascertain a change style of the map data of the cleaning main body, and may choose to update the map data, not update the map data, or update a part of the map data. Based on this, the mobile terminal may not respond to the summary information of map data changes. In this case, the map data of the mobile terminal may not be updated, and the mobile terminal may also send map data update request information to the server to request an update to the map data. In a case where the server receives the map data update request information, the server may send the changed data to the mobile terminal based on the request content of the map data update request information.

It can be understood that the mobile terminal may be a mobile device such as a mobile phone, a tablet computer, a computer, a handheld mobile terminal, etc. The mobile terminal may also include an application (APP) installed in the mobile device. The specific style of the mobile terminal is not limited in the present application.

It can be understood that the cached map data information may be packaged data obtained by storing a snapshot of the map data to generate a map snapshot id.

In a feasible implementation, the step of determining the summary information of map data changes based on the current map data information and the cached map data information includes: in response to map data change request information sent by the mobile terminal, comparing the current map data information with the cached map data information to determine changed map data; determining summary information of the changed map data based on the changed map data; and summarizing the summary information to acquire the summary information of map data changes; wherein the summary information includes: map data type information and/or map data change amount information.

In this technical solution, specific steps for determining the summary information of map data changes are further provided. By comparing the current map data information with the cached map data information, the changed map data may be determined based on a difference between the two sets of data, and then the changed map data may be identified to determine the summary information of the changed map data. Finally, the summary information of the changed map data may be summarized to generate the summary information of map data changes. After the mobile terminal receives the summary information of map data changes, the mobile terminal may learn about the map data changes of the smart home device. The mobile terminal may determine whether to update the map data based on the summary information of map data changes, which can reduce a request frequency of the server and improve the performances of the mobile terminal.

In this technical solution, the mobile terminal may send map data change request information to the server, and the server may generate the summary information of map data changes in response to the map data change request information, and send the summary information of map data changes to the mobile terminal, so that the mobile terminal may learn about the type of the specific changed map data.

In a feasible implementation, the map data type information includes at least one of path information, obstacle information and basic lattice data.

In this technical solution, the specific content of the map data type information is further provided. The map data type information may include path information, obstacle information and basic lattice data. The path information represents a travel path of the cleaning main body. The obstacle information represents a state of obstacles in a working area of the cleaning main body. The basic lattice data includes but is not limited to charging piles, subarea information, Goto planning paths, area selection, target points, virtual walls, restricted areas (sweeping restricted areas, mopping restricted areas, as well as sweeping and mopping restricted areas), carpets, custom carpets, easy-to-get-stuck points, thresholds, edited thresholds, cliff restricted areas, floor materials, furniture, pile types, floor directions, and smart scene area selection. In this way, in a case where the mobile terminal acquires the path information, obstacle information and basic lattice data, the mobile terminal may learn about the working state of the cleaning main body.

In a feasible implementation, the step of sending the changed map data to the mobile terminal in response to the map data update request information sent by the mobile terminal includes: responding to the map data update request information sent by the mobile terminal; determining a type of map data to be updated based on the map data update request information; and sending the map data corresponding to the type of map data to be updated to the mobile terminal based on the type of map data to be updated.

In this technical solution, a step of sending the changed map data based on the map data update request information is further provided. After the server receives the map data update request information, the map data update request information may be parsed to acquire the type of map data to be updated corresponding to the map data update request information. Further, the server may call a part of map data that corresponds to the type of map data to be updated, and send this part of the map data to the mobile terminal. In addition, different map data may be transmitted in different manners. In this way, on the one hand, during updating of the map data, it is not necessary to package all the map data, but only send a part of the map data that has changed, which reduces the amount of map data being sent, can reduce the requirements of the map data update for network bandwidth and server transfer cache, and thus facilitate the map data update. On the other hand, the changed map data is sent based on the map data update request information, such that the changed map data sent may be adapted to the map data update request information, thereby making the changed map data being sent more targeted and being able to improve the user experience.

In a feasible implementation, in a case where the type of map data to be updated includes path data update, the step of sending the map data corresponding to the type of map data to be updated to the mobile terminal based on the type of map data to be updated includes: in a case where a data volume of path data is greater than a first threshold, sending the path data in multiple times; and in a case where the data volume of the path data is less than or equal to the first threshold, sending all the path data; wherein the first threshold is determined based on the network bandwidth.

In this technical solution, a transmission method of map data in a case where the type of map data to be updated includes path data update is further provided. In a case where the type of data to be updated sent by the mobile terminal to the server includes path data, the data volume of the path data may be identified. If the data volume is greater than the first threshold, it indicates that the data volume of the path data is large. In this case, sending the path data in multiple times leads to slow transmission speed and will occupy a large bandwidth. Based on this, the transmission efficiency of the path data can be improved by sending the path data in multiple times, while reducing the bandwidth occupied by the path data update.

When the data volume of the path data is less than or equal to the first threshold, it indicates that the amount of change in the path data is small, and the transmission of the path data will not occupy too much bandwidth, so that all the path data may be sent directly to the mobile terminal.

It can be understood that the first threshold may be determined based on the network bandwidth. That is, the network bandwidth is positively correlated with the value of the first threshold, which can ensure the efficient transmission of the map data without occupying too much bandwidth, thereby improving the performances of the mobile terminal and the user experience.

It can be understood that, taking the method for updating the map data being applied to a cleaning system as an example, the path data may include a path that has been cleaned. The path change refers that the cleaning main body moves forward a certain distance. The mobile terminal may request this displacement of the cleaning main body separately by sending map data update request information. Further, the mobile terminal may add this displacement to be drawn in a display side, so as to achieve requesting and drawing while walking, thereby being able to improve the user experience.

In a feasible implementation, the step of sending the path data in multiple times includes:
storing the path data in slices to acquire a plurality of sub-path information data and first number information of the plurality of sub-path information data; sending the plurality of sub-path information data in multiple times; and in a case where the number of sending reaches the first number information, stopping sending the sub-path information data.

In this technical solution, specific steps for sending the path data in multiple times are further provided. The path data may be stored in slices, and then the plurality of sub-path information data may be acquired. Then, a plurality of pieces of sub-path information may be sent separately in multiple times to complete the sending of the path data in batches.

In this technical solution, when the plurality of pieces of sub-path information is sent, the number of all sub-path information data may be acquired and recorded as the first number information, and then the number of times the sub-path information data is sent is acquired. After the number of sending reaches the first number information, it indicates that sending of the path data has been completed. In this case, the transmission of the path data may be stopped.

In a feasible implementation, in a case where the type of map data to be updated includes obstacle data update, the step of sending the map data corresponding to the type of map data to be updated to the mobile terminal based on the type of map data to be updated includes: storing a snapshot of currently latest obstacle data to acquire a plurality of sub-obstacle data and second number information of the plurality of sub-obstacle data; sending the plurality of sub-obstacle data in multiple times; and in a case where the number of sending reaches the second number information, stopping sending the sub-obstacle data.

In this technical solution, a step of sending the map data in a case where the type of map data to be updated includes obstacle data update is further provided. In this case, a snapshot of the obstacle data may be stored, and a plurality of sub-obstacle data may be acquired through sliced snapshot storage. Then, the obstacle data may be sent to the mobile terminal by sending the plurality of sub-obstacle data in multiple times. By sending the obstacle data in multiple times, the efficiency of map data transmission can be improved without occupying too much bandwidth.

In this technical solution, when the plurality of sub-obstacle data is sent, the number of all sub-obstacle data may be acquired and recorded as the second number information. Then, the number of times the sub-obstacle data is sent is acquired. After the number of sending reaches the second number information, it indicates that sending of the obstacle data has been completed. In this case, the transmission of the obstacle data may be stopped.

In this technical solution, the sub-obstacle data includes obstacle data and load information. Such a setting facilitates the mobile terminal to parse and store the sub-obstacle data.

In this technical solution, it is further provided that, in a case where the type of map data to be updated includes basic lattice data, the basic lattice data includes lattice data composed of obstacle points, reachable points, and unreachable points. The step of sending the map data corresponding to the type of map data to be updated to the mobile terminal based on the type of map data to be updated includes: determining a degree of change in the basic lattice data based on the basic lattice data of the current map data information and the basic lattice data of the cached map data information; in a case where the degree of change in the basic lattice data exceeds a third threshold, for example, the number of points corresponding to the obstacle points and the reachable points, which have changed, is greater than 20, sending the changed map data to the mobile terminal, that is, sending all the changed map data to the mobile terminal by the server; wherein the degree of change in the basic lattice data includes an amount of change in the basic lattice data and/or a rate of change in the basic lattice data.

In a feasible implementation, the method for updating the map data further includes: determining the degree of change in the map data based on the current map data information and the cached map data information; and in a case where the degree of change in the map data exceeds a second threshold, sending map update reminder information to the mobile terminal; wherein the degree of change in the map data includes the amount of change in the map data and/or the rate of change in the map data.

According to the first method for updating the map data as provided in the embodiment of the present application, it is considered that the updating of the map data is performed based on the map data update request information, that is, based on a request from the mobile terminal. However, the cached map data information stored in the mobile terminal may be significantly different from the current map data information in a case where the mobile terminal does not make a map data update request for a long time, resulting in a large difference between information displayed by the mobile terminal and actual data of the smart home device. In this case, the degree of change in the map data may be determined based on the current map data information and the cached map data information in this technical solution. If the degree of change in the map data is greater than the second threshold, it indicates that the current map data information and the cached map data information are already different to a greater extent. In this case, map update reminder information may be sent to the mobile terminal to remind the user to update the map data.

In this technical solution, the degree of change in the map data includes the amount of change in the map data and/or the rate of change in the map data. The amount of change in the map data and/or the rate of change in the map data may both represent the degree of difference between the current map data information and the cached map data information.

In a feasible implementation, the method for updating the map data further includes: updating the current map data information in response to map setting change information received from the mobile terminal.

In this technical solution, the first method for updating the map data as provided in the embodiment of the present application also takes into account that under some working conditions, each server may be connected to two or more mobile terminals, while these mobile terminals may set the map data of the smart home device. Based on this, some of the mobile terminals may change map data settings of the smart home device by issuing map setting change information. In this case, the server may update the changed settings of the mobile terminal as the current map data information. Based on this, other mobile terminals may learn about changes in the settings through the summary information of map data changes. Further, map data update request information is then sent to achieve the consistency of setting parameters on different mobile terminals, thereby being able to improve the user experience.

It can be understood that the contents of setting the map data include area selection, target points, virtual walls, restricted areas (sweeping restricted areas, mopping restricted areas, as well as sweeping and mopping restricted areas), and the like.

In a feasible implementation, the method for updating the map data further includes: acquiring the cached map data information. The step of acquiring the cached map data information includes: in response to map data acquisition request information sent by the mobile terminal, storing a snapshot of the current map data information to acquire the cached map data information; and sending the cached map data information to the mobile terminal; wherein the cached map data information includes a snapshot id.

In this technical solution, the first method for updating the map data as provided in the embodiment of the present application may further include: acquiring the cached map data information. In the process of acquiring the cached map data information, the mobile terminal may issue map data acquisition request information. After receiving the map data acquisition request information, the server may store the snapshots of all the map data and package them to acquire the cached map data information, and further send the cached map data information to the mobile terminal. Thus, the mobile terminal may acquire all the map data.

As shown in FIG. 2, a second method for updating map data according to the second aspect of the embodiments of the present application is proposed. The second method includes the following steps.

In Step 201: summary information of map data changes sent via a server side is received. After receiving the summary information of map data changes, the mobile terminal may determine which data has changed compared with the cached map data information based on the summary information of map data changes, and then request the server to update the map data based on actual needs, learn about that the map data is not updated, or update a part of the map data.

In Step 202: map data update request information is sent to the server side. In a case where the mobile terminal needs to update the map data, the map data update request information may be issued by the mobile terminal, and the server may issue the changed map data after responding to the map data update request.

In Step 203: the changed map data sent via the server side is received, and the map data is updated based on the changed map data. After the mobile terminal receives the changed map data, the map data may be updated.

In the method for updating the map data as provided in the embodiment of the present application, the server may determine the summary information of the map data changes based on the current map data information and the cached map data information during operation, and send the summary information of the map data changes. In a case where the mobile terminal receives the summary information of the map data changes, it can be learnt about which map data of the smart home device has changed. Further, the mobile terminal may send map data update request information. In a case where the map data update request information is received, the changed map data may be sent to the mobile terminal. According to this method for updating the map data, the summary information of map data changes is first sent to the mobile terminal. The mobile terminal may ascertain which map data of the smart home device has changed. Further, the mobile terminal then issues the map data update request information. In a case where the map data update request information is received, the changed map data may be fed back to the mobile terminal in a targeted manner. Based on this setting, on the one hand, it is unnecessary to package all map data during the updating of the map data, but only send a part of the map data that has changed, which reduces the amount of map data being sent, can reduce the continuous requirements of the map data update for network bandwidth and server transfer cache, and thus facilitates the map data update. On the other hand, the changed map data is sent only in a case where the map data update request information is received, which can reduce the frequency of map data transmission, and then reduce the frequency at which the mobile terminal requests to the server, such that the request frequency-associated cost and the storage space size-associated cost can be greatly reduced. Meanwhile, the frequency at which the mobile terminal parses the map data can be reduced, the performances of the mobile terminal can be improved, and the power consumption and heat generation of the mobile terminal can be reduced. Further, the changed map data is sent based on the map data update request information, so that the changed map data being sent may be adapted to the map data update request information, thereby making the changed map data being sent more targeted and being able to improve the user experience.

Taking the method for updating the map data as provided in the embodiment of the present application being applied to a smart home device (e.g., being applied to a cleaning system) as an example, the cleaning system may include a server, a mobile terminal and a cleaning main body. The server is in communication connection with the cleaning main body, and the mobile terminal is in communication connection with the server. The server may learn about map data information of the cleaning main body, while the mobile terminal may learn about the map data information of the cleaning main body via the server. The map data information may be map data information, which includes but is not limited to charging piles, subarea information, Goto planning paths, area selection, target points, virtual walls, restricted areas (sweeping restricted areas, mopping restricted areas, as well as sweeping and mopping restricted areas), carpets, custom carpets, easy-to-get-stuck points, thresholds, edited thresholds, cliff restricted areas, floor materials, furniture, pile types, enemies, floor directions, smart scene area selection and other information. The first method for updating the map data as provided in the embodiment of the present application may be applicable to mobile terminals. The server may use map data currently displayed and/or stored by the mobile terminal as cached map data information. The server may learn about the current map data information of the cleaning main body by being in communication connection with the cleaning main body. The current map data information is current map data information. The map data that has changed in the current map data information compared with the cached map data information may be learnt based on information to be updated and the cached map data information. Further, the summary information of map data changes may be determined and sent. After receiving the summary information of map data changes, the mobile terminal may ascertain a change style of the map data of the cleaning main body, and may choose to update the map data, not update the map data, or update a part of the map data. Based on this, the mobile terminal may not respond to the summary information of map data changes. In this case, the map data of the mobile terminal may not be updated, and the mobile terminal may also send map data update request information to the server to request an update to the map data. Upon receiving the map data update request information, the server may send the changed map data to the mobile terminal based on the request content of the map data update request information.

It can be understood that the mobile terminal may be a mobile device such as a mobile phone, a tablet computer, a computer, a handheld mobile terminal, etc. According to the present application, the mobile terminal may further include an application (APP) installed in the mobile device, and the specific style of the mobile terminal is not limited in the present application.

In a feasible implementation, the summary information of map data changes includes: summarized information of summary information of the changed map data. Based on such settings, upon receiving the summary information of map data changes, the mobile terminal may clearly identify the changed map data through the summary information of map data changes, and further determine the map data that needs to be updated based on actual needs.

In a feasible implementation, the map data update request information includes a type of map data to be updated, and the type of map data to be updated is one or more of a plurality of pieces of summary information. It can be understood that the type of map data to be updated may be selected and determined by the mobile terminal, and the mobile terminal may select the map data to be updated from the summarized information of the summary information of the changed map data. The type of map data to be updated may also be generated by the mobile terminal itself. The type of map data to be updated is one or more of the plurality of pieces of summary information. On this basis, on the one hand, during updating of the map data, it is not necessary to package all the map data, but only send a part of the map data that has changed, which reduces the amount of map data being sent, can reduce the continuous requirements of the map data update for network bandwidth and server transfer cache, and thus facilitates the map data update. On the other hand, the changed map data is sent only in a case where the map data update request information is received, which can reduce the frequency of map data transmission, and then reduce the frequency at which the mobile terminal requests to the server, such that the request frequency-associated cost and the storage space size-associated cost can be greatly reduced. Meanwhile, the frequency at which the mobile terminal parses the map data can be reduced, the performances of the mobile terminal can be improved, and the power consumption and heat generation of the mobile terminal are reduced. In yet another aspect, the changed map data is sent based on the map data update request information, such that the changed map data being sent may be adapted to the map data update request information, thereby making the changed map data being sent more targeted and being able to improve the user experience.

In a feasible implementation, in a case where the type of map data to be updated includes path data, the map data update request information is sent via an http interface, and the map data update request information includes a starting point of a path change.

Considering that, taking the map data update of the cleaning system as an example, when users need to view a map of a cleaning robot, there are continuous requirements for network bandwidth and server transfer cache in conventional technologies. The server needs to use FDS files to cache map data and send it to the mobile terminal. Therefore, the FDS service is heavily burdened, resulting in high FDS request frequency-associated cost and storage space size-associated cost. In addition, since the mobile terminal needs to continuously acquire and parse the map data, the performances of the mobile terminal (mainly including power consumption and heat generation) are affected to a certain extent. Based on this, in this technical solution, in a case where the mobile terminal needs to update the path data, map data update request information may be sent via the http interface. Such a setting can further improve the efficiency of path data transmission, while reducing the request frequency-associated cost and storage space-associated cost in the process of transmitting the path data.

In a feasible implementation, the map data update request information is sent every time interval.

In this technical solution, the mobile terminal may further be provided with a timing function. After a time interval, it indicates that the mobile terminal has not updated the map data for a long time. In this case, the mobile terminal may generate and send the map data update request information by itself to ensure that the map data of the mobile terminal can be closer to the current state of the smart home device, which can make the use and control of the smart home device more convenient.

In a feasible implementation, the map data change request information is sent every time interval.

In this technical solution, the mobile terminal may periodically send the map data change request information to the server. The server may generate summary information of map data changes in response to the map data change request information, and send the summary information of map data changes to the mobile terminal, so that the user may periodically learn about the type of map data that has changed.

In a feasible implementation, the step of receiving the changed map data includes: in a case where the received changed map data is path data, determining the number of times the data is received; and in a case where the number of times the data is received reaches first number information, stopping receiving the path data.

In this technical solution, a step of receiving the changed map data is further provided. In a case where the type of map data to be updated sent by the mobile terminal to the server includes the path data, the server may store the path data in slices, thereby acquiring a plurality of sub-path information data. Then, the plurality of pieces of sub-path information is sent to the server in multiple times to complete the sending of the path data in batches. Upon sending the plurality of pieces of sub-path information, the server may count the number of all sub-path information data, which is recorded as the first number information. Then, the mobile terminal may count the number of times the data is received. After the number of receptions reaches the first number information, it indicates that the sending of the path data has been completed. In this case, the reception of the path data may be stopped.

In a feasible implementation, in a case where the received changed map data is obstacle data, the number of times the data is received may be determined; and in a case where the number of times the data is received reaches the second number information, the reception of the obstacle data is stopped.

In this technical solution, a step of receiving the changed map data is further provided. In a case where the type of map data to be updated sent by the mobile terminal to the server includes the obstacle data, the server may store the obstacle data in slices, thereby acquiring a plurality of sub-obstacle data. Then, the sub-obstacle data is respectively sent to the server in multiple times to complete the sending of the path data in batches. Upon sending the plurality of sub-obstacle data, the server may count the number of all sub-obstacle data, which is recorded as the second number information. Then, the mobile terminal may count the number of times the data is received. After the number of receptions reaches the second number information, it indicates that the sending of the obstacle data has been completed. In this case, the reception of the obstacle data may be stopped.

In a feasible implementation, the method for updating the map data further includes: sending map data acquisition request information to the server side; receiving cached map data information sent via the server side; and parsing and displaying the cached map data information; wherein the cached map data information includes a snapshot id.

In this technical solution, the second method for updating the map data as provided in the embodiment of the present application may further include: sending map data acquisition request information by the mobile terminal; upon receiving the map data acquisition request information, performing snapshot storage and packaging of all map data by the server to acquire cached map data information; and further sending the cached map data information to the mobile terminal, so that the mobile terminal may acquire all map data.

In a feasible implementation, the method for updating the map data further includes: sending map data acquisition request information in response to map update reminder information sent by the server side; and receiving the cached map data information sent via the server side.

According to the second method for updating the map data as provided in the embodiment of the present application, it is considered that the update of the map data is performed based on the map data update request information, that is, based on a request from the mobile terminal. However, in a case where the mobile terminal does not make a map data update request for a long time, the cached map data information stored in the mobile terminal may differ too much from the current map data information, resulting in a large difference between information displayed by the mobile terminal and actual map data of the smart home device. In this case, the server may determine the degree of data change based on the current map data information and the cached map data information in this technical solution. If the degree of change in the map data is greater than a second threshold, it indicates that the current map data information and the cached map data information are already different to a greater extent. In this case, map update reminder information may be sent to the mobile terminal to remind the mobile terminal to update the map data. However, in a case where the mobile terminal receives the update reminder information, the mobile terminal may respond to the update reminder information and send map data acquisition request information. After receiving the map acquisition request information, the server may send new current map data information to the mobile terminal, and the mobile terminal may update all map data based on cached map data information.

As shown in FIG. 3, according to the third aspect of the embodiments of the present application, a server 701 is proposed. The server 701 includes: a memory 301, configured to store a computer program therein; a processor 302, configured to execute the computer program; wherein the processor 302 implements the first method for updating the map data in any of the above technical solutions when executing the computer program.

It can be understood that the server 701 as provided in the embodiment of the present application implements the first method for updating the map data in any of the above technical solutions, and thus the server 701 has achieved all the beneficial effects of the first method for updating the map data in any of the above technical solutions.

The server 701 as provided in the embodiment of the present application may determine the summary information of map data changes based on the current map data information and the cached map data information during operation, and send the summary information of map data changes. In a case where the mobile terminal receives the summary information of map data changes, it can be learnt about which map data of the smart home device have changed. Further, the mobile terminal may issue map data update request information. In a case where the map data update request information is received, the changed map data may be sent to the mobile terminal. In such a method for updating the map data, the summary information of map data changes is first sent to the mobile terminal, and the mobile terminal may ascertain which map data of the smart home device have changed. Further, the mobile terminal then issues map data update request information. In a case where the map data update request information is received, the changed map data may be fed back to the mobile terminal in a targeted manner. With such a setting, on the one hand, during the map data update, it is not necessary to package all map data, but only send a part of the map data that has changed, which reduces the amount of map data being sent, can reduce the continuous requirements of map data update for network bandwidth and transfer cache of the server 701, and thus facilitate the map data update. On the other hand, the changed map data is sent only in a case where the map data update request information is received, which can reduce the frequency of map data transmission, and then reduce the frequency at which the mobile terminal requests to the server 701, thereby greatly reducing the request frequency-associated cost and the storage space size-associated cost. Meanwhile, the frequency at which the mobile terminal parses the map data can be reduced, the performances of the mobile terminal can be improved, and the power consumption and heat generation of the mobile terminal can be reduced. Furthermore, the changed map data is sent based on the map data update request information, such that the changed map data being sent may be adapted to the map data update request information, thereby making the changed map data being sent more targeted and being able to improve the user experience.

Taking the server 701 provided in the embodiment of the present application being applied to a smart home device (being applied to a cleaning system) as an example, the cleaning system may include the server 701, a mobile terminal and a cleaning main body. The server 701 is in communication connection with the cleaning main body, and the mobile terminal is in communication connection with the server 701. The server 701 may learn about map data information of the cleaning main body, while the mobile terminal may learn about the map data information of the cleaning main body through the server 701. The map data information includes but is not limited to charging piles, subarea information, Goto planning paths, area selection, target points, virtual walls, restricted areas (sweeping restricted areas, mopping restricted areas, as well as sweeping and mopping restricted areas), carpets, custom carpets, easy-to-get-stuck points, thresholds, edited thresholds, cliff restricted areas, floor materials, furniture, pile types, enemies, floor directions, smart scene area selection and other information. The first method for updating the map data as provided in the embodiment of the present application may be adapted to the server 701. The server 701 may use map data currently displayed and/or stored by the current mobile terminal as the cached map data information. The server 701 may learn about the current data information of the cleaning main body by being in communication connection with the cleaning main body. The current data information is current map data information. Based on information to be updated and the cached map data information, the data that has changed in the current map data information compared with the cached map data information may be learnt, and the summary information of map data changes may be further determined and sent. After receiving the summary information of map data changes, the mobile terminal may ascertain a change style of the data of the cleaning main body, and may choose to update the map data, not update the map data, or update a part of the map data. Based on this, the mobile terminal may not respond to the summary information of map data changes. In this case, the data of the mobile terminal may not be updated, and the mobile terminal may also send map data update request information to the server 701 to request an update to the map data. In a case where the server 701 receives the map data update request information, the server 701 may send the changed map data to the mobile terminal based on the request content of the map data update request information.

In some examples, control apparatus may further include a user interface, a network interface, a camera, a radio frequency (radio frequency, RF) circuit, a sensor, an audio circuit, a WI-FI module, etc. The user interface may include a display (display), an input unit such as a keyboard (keyboard), etc. The optional user interface may also include a USB interface, a card reader interface, etc. The network interface may optionally include a standard wired interface, a wireless interface (such as a WI-FI interface), etc.

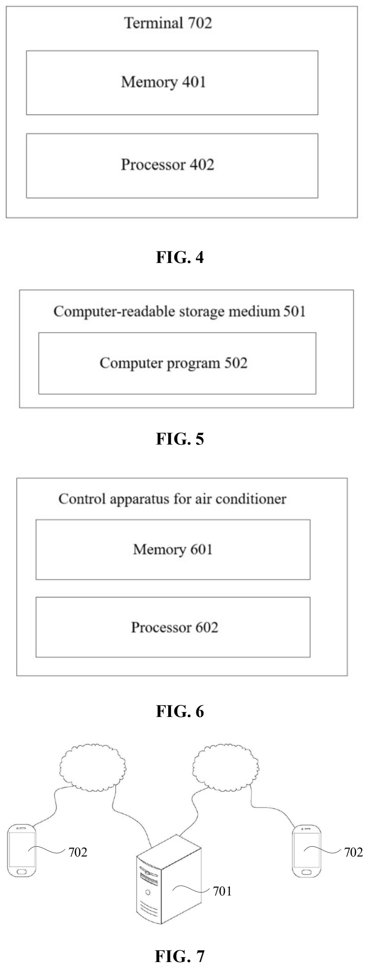

As shown in FIG. 4, according to the fourth aspect of the embodiments of the present application, a mobile terminal 702 is proposed. The mobile terminal 702 includes: a memory 401, configured to store a computer program therein; and a processor 402, configured to execute the computer program, wherein the processor 402 implements the second method for updating the map data in any of the above technical solutions when executing the computer program.

It can be understood that the mobile terminal 702 as provided in the embodiment of the present application has achieved all the beneficial effects of the second method for updating the map data in any of the above technical solutions since the mobile terminal 702 implements the second method for updating the map data in any of the above technical solutions.

The mobile terminal 702 as provided in the embodiment of the present application may determine the summary information of map data changes based on the current map data information and the cached map data information during operation, and send the summary information of map data changes. In a case of receiving the summary information of map data changes, the mobile terminal 702 may learn about which map data of the smart home device have changed. Further, the mobile terminal 702 may issue map data update request information. In a case where the map data update request information is received, the changed map data may be sent to the mobile terminal 702. In such a method for updating the map data, the summary information of map data changes is first sent to the mobile terminal 702. The mobile terminal 702 may ascertain which data of the smart home device have changed. Further, the mobile terminal 702 then issues the map data update request information. In a case where the map data update request information is received, the changed map data may be fed back to the mobile terminal 702 in a targeted manner. With such a setting, on the one hand, during the updating of the map data, it is not necessary to package all map data, but only send a part of the map data that has changed, which can reduce the amount of map data being sent, reduce the continuous requirements of map data update for network bandwidth and server transfer cache, and thus facilitates the map data update. On the other hand, the changed map data is sent only in a case where the map data update request information is received, which can reduce the frequency of map data transmission, and then reduce the frequency at which the mobile terminal 702 requests to the server, such that the request frequency-associated and the storage space size-associated cost can be greatly reduced. Meanwhile, the frequency at which the mobile terminal 702 parses the map data can be reduced, the performances of the mobile terminal 702 can be improved, and the power consumption and heat generation of the mobile terminal 702 can be reduced. Furthermore, the changed map data may be sent based on the map data update request information, such that the changed map data sent may be adapted to the map data update request information, thereby making the changed map data being sent more targeted and being able to improve the user experience.

Taking the mobile terminal 702 as provided in the embodiment of the present application being applied to a smart home device (e.g., being applied to a cleaning system) as an example, the cleaning system may include a server, the mobile terminal 702 and a cleaning main body. The server is in communication connection with the cleaning main body, and the mobile terminal 702 is in communication connection the server. The server may learn about the map data information of the cleaning main body, while the mobile terminal 702 may learn about the map data information of the cleaning main body via the server. The map data information includes but is not limited to charging piles, subarea information, Goto planning paths, area selection, target points, virtual walls, restricted areas (sweeping restricted areas, mopping restricted areas, as well as sweeping and mopping restricted areas), carpets, custom carpets, easy-to-get-stuck points, thresholds, edited thresholds, cliff restricted areas, floor materials, furniture, pile types, enemies, floor directions, smart scene area selection and other information. The first method for updating the map data as provided in the embodiment of the present application may be adapted to the server. The server may use map data currently displayed and/or stored by the mobile terminal 702 as the cached map data information. The server may learn about the current map data information of the cleaning main body by being in communication connection with the cleaning main body. The server may learn about map data that has changed in the current map data information compared with the cached map data information based on the current map data information and the cached map data information. Further, the summary information of map data changes may be determined and sent. After receiving the summary information of map data changes, the mobile terminal 702 may ascertain a change style of the map data of the cleaning main body, and may choose to update the data, not update the data, or update a part of the data. Based on this, the mobile terminal may not respond to the summary information of map data changes. In this case, the map data of the mobile terminal 702 may not be updated, and the mobile terminal may also send the map data update request information to the server to request an update to the map data. Upon receiving the map data update request information, the server may send the changed map data to the mobile terminal 702 based on the request content of the map data update request information.

In some examples, control apparatus may further include a user interface, a network interface, a camera, a radio frequency (radio frequency, RF) circuit, a sensor, an audio circuit, a WI-FI module, etc. The user interface may include a display (display), an input unit such as a keyboard (keyboard), etc. The optional user interface may also include a USB interface, a card reader interface, etc. The network interface may optionally include a standard wired interface, a wireless interface (such as a WI-FI interface), etc.

As shown in FIG. 5, according to the fifth aspect of the embodiments of the present application, a computer-readable storage medium 501 is proposed. The computer-readable storage medium 501 stores a computer program 502 to implement the first method for updating the map data in any of the above technical solutions.

It can be understood that the computer-readable storage medium 501 provided in the embodiment of the present application has achieved all the beneficial effects of the first method for updating the map data in any of the above technical solutions because the computer-readable storage medium 501 implements the first method for updating the map data in any of the above technical solutions, which will not be repeated here.

Based on such an understanding, the technical solutions of the present application may be embodied in the form of a software product, which may be stored in a non-volatile storage medium (which may be a CD-ROM, a U disk, a mobile hard disk, etc.), including a number of instructions for a computer device (which may be a personal computer, a server, or a network device, etc.) to execute the methods of various implementation scenarios in the present application.

As shown in FIG. 6, according to the sixth aspect of the embodiments of the present application, a computer-readable storage medium 601 is proposed. The computer-readable storage medium 601 stores a computer program 602 to implement the second method for updating the map data as in any of the above technical solutions.

It can be understood that the computer-readable storage medium 601 as provided in the embodiment of the present application has achieved all the beneficial effects of the second method for updating the map data as in any of the above technical solutions because it implements the second method for updating the map data in any of the above technical solutions, which will not be repeated here.

Based on such an understanding, the technical solution of the present application may be embodied in the form of a software product, which may be stored in a non-volatile storage medium (which may be a CD-ROM, a U disk, a mobile hard disk, etc.), including a number of instructions for a computer device (which may be a personal computer, a server, or a network device, etc.) to execute the methods of various implementation scenarios in the present application.

As shown in FIG. 7, according to the seventh aspect of the embodiments of the present application, a cleaning system is proposed. The cleaning system includes: the server 701 in the above technical solutions; and/or the mobile terminal 702 in the above technical solutions.

The cleaning system provided in the embodiment of the present application has achieved all the beneficial effects of the server 701 and/or the mobile terminal 702 in the above technical solutions because the cleaning system includes the server 701 and/or the mobile terminal 702 in the above technical solutions.

The cleaning system provided in the embodiment of the present application may include the server 701, the mobile terminal 702 and a cleaning main body. The server 701 is in communication connection with the cleaning main body, and the mobile terminal 702 is in communication connection with the server 701. The server 701 may learn about the map data information of the cleaning main body, while the mobile terminal 702 may learn about the map data information of the cleaning main body via the server 701. The map data information includes but is not limited to charging piles, subarea information, Goto planning paths, area selection, target points, virtual walls, restricted areas (sweeping restricted areas, mopping restricted areas, as well as sweeping and mopping restricted areas), carpets, custom carpets, easy-to-get-stuck points, thresholds, edited thresholds, cliff restricted areas, floor materials, furniture, pile types, enemies, floor directions, smart scene area selection and other information. The first method for updating the map data provided in the embodiment of the present application may be adapted to the server 701. The server 701 may use map data currently displayed and/or stored by the mobile terminal 702 as the cached map data information. The server 701 may learn about the current map data information of the cleaning main body by being in communication connection with the cleaning main body. Based on the current map data information and the cached map data information, the map data that has changed in the current map data information compared with the cached map data information may be learnt. Further, the summary information of map data changes may be determined and sent. After receiving the summary information of map data changes, the mobile terminal 702 may ascertain a change style of the map data of the cleaning main body, and may choose to update the map data, not update the map data, or update a part of the map data. Based on this, the mobile terminal may not respond to the summary information of map data changes. In this case, the map data of the mobile terminal 702 may not be updated, and the mobile terminal may also send map data update request information to the server 701 to request an update to the map data. In a case where the server 701 receives the map data update request information, the server 701 may send the changed map data to the mobile terminal 702 based on the request content of the map data update request information.

In an exemplary embodiment, the control apparatus may further include an input/output interface and a display device. Various functional units may communicate with each other via a bus. The memory is configured to store a computer program therein. The processor is configured to execute the program stored in the memory to implement the methods in the above embodiments.

The above storage medium may further include an operating system and a network communication module. The operating system is a program that manages hardware and software resources of an entity device of the above method, and supports the operation of an information processing program and other software and/or programs. The network communication module is configured to enable the communication between the components inside the storage medium, and the communication with other hardware and software in an information processing entity device.

Through the description of the above implementations, a person skilled in the art may clearly understand that the present application may be implemented by means of software plus a necessary general hardware platform, or by means of hardware.

The present application is described with reference to the flowcharts and/or block diagrams of the methods, devices (systems), and a computer program product according to the embodiments of the present application. It should be understood that each process and/or block in the flowcharts and/or block diagrams, as well as the combination of the processes and/or blocks in the flowcharts and/or block diagrams, may be implemented by computer program instructions. These computer program instructions may be provided to a processor of a general-purpose computer, a special-purpose computer, an embedded computer or other programmable data processing device to produce a machine, so that the instructions executed by the processor of the computer or other programmable data processing device produce an apparatus for implementing the functions specified in one or more processes of the flowcharts and/or one or more blocks of the block diagrams.

In the present application, the terms "first", "second" and "third" are used for descriptive purposes only and cannot be understood as indicating or implying relative importance. The term "a plurality of" refers to two or more, unless otherwise clearly defined. Terms such as "mounted", "connected with", "connected to", "fixed" and the like should be understood in a broad sense. For example, "connected to" may be a fixed connection, a detachable connection, or an integral connection; "connected with" may be a direct connection or an indirect connection via an intermediary. For a person of ordinary skilled in the art, the specific meanings of the above terms in the present application may be understood according to the specific circumstances.

It should be understood that the terms "upper", "lower", "left", "right", "front", "back" and the like in the description of the present application indicate the orientation or positional relationships based on the orientation or positional relationship shown in the drawings, which is only for the convenience of describing the present application and simplifying the description, rather than indicating or implying that the apparatuses or units referred to must have a specific direction, be constructed and operated in a specific orientation, and therefore, cannot be understood as a limitation on the present application.

In the description of the present specification, the description of the terms "one embodiment", "some embodiments", "specific embodiments" and the like means that the specific features, structures, materials or characteristics described in conjunction with the embodiments or examples are included in at least one embodiment or example of the present application. In the present specification, the schematic representation of the above terms does not necessarily refer to the same embodiment or example. Moreover, the specific features, structures, materials or characteristics described may be combined in any one or more embodiments or examples in a suitable manner.

The above are only preferred embodiments of the present application and are not intended to limit the present application. For those skilled in the art, the present application may have various changes and variations. Any modifications, equivalent substitutions, improvements, etc. made within the spirit and principles of the present application shall be encompassed in the protection scope of the present application.

## Claims

1. A method for updating map data, which is applied to a server side and comprises:
determining summary information of map data changes based on current map data information and cached map data information, and sending the summary information of map data changes to a mobile terminal; and
sending changed map data to a mobile terminal in response to map data update request information sent by the mobile terminal.

2. The method for updating map data according to claim 1, wherein the step of determining the summary information of map data changes based on the current map data information and the cached map data information comprises:
in response to map data change request information sent by the mobile terminal, comparing the current map data information with the cached map data information to determine the changed map data;
determining summary information of the changed map data based on the changed map data; and
summarizing the summary information to acquire the summary information of map data changes;
wherein the summary information comprises: map data type information and/or map data change amount information.

3. The method for updating the map data according to claim 2, wherein,
the map data type information comprises at least one of path information, obstacle information and basic lattice data.

4. The method for updating the map data according to claim 1, wherein the step of sending the changed map data to the mobile terminal in response to the map data update request information sent by the mobile terminal comprises:
responding to the map data update request information sent by the mobile terminal;
determining a type of map data to be updated based on the map data update request information; and
sending the map data corresponding to the type of map data to be updated to the mobile terminal based on the type of map data to be updated.

5. The method for updating the map data according to claim 4, wherein, in a case where the type of map data to be updated comprises path data update, the step of sending the map data corresponding to the type of map data to be updated to the mobile terminal based on the type of map data to be updated comprises:
in a case where a data volume of path data is greater than a first threshold, sending the path data in multiple times; and
in a case where the data volume of the path data is less than or equal to the first threshold, sending all the path data.

6. The method for updating the map data according to claim 5, wherein the step of sending the path data in multiple times comprises:
storing the path data in slices to acquire a plurality of sub-path information data and first number information of the plurality of sub-path information data;
sending the plurality of sub-path information data in multiple times; and
in a case where the number of sending reaches the first number information, stopping sending the sub-path information data.

7. The method for updating the map data according to claim 4, wherein, in a case where the type of map data to be updated comprises obstacle data update, the step of sending the map data corresponding to the type of map data to be updated to the mobile terminal based on the type of map data to be updated comprises:
storing a snapshot of currently latest obstacle data to acquire a plurality of sub-obstacle data and second number information of the plurality of sub-obstacle data;
sending the plurality of sub-obstacle data in multiple times; and
in a case where the number of sending reaches the second number information, stopping sending the sub-obstacle data.

8. The method for updating the map data according to claim 4, wherein, in a case where the type of map data to be updated comprises basic lattice data, the step of sending the map data corresponding to the type of map data to be updated to the mobile terminal based on the type of map data to be updated comprises:
determining a degree of change in the basic lattice data based on the basic lattice data of the current map data information and the basic lattice data of the cached map data information; and
in a case where the degree of change in the basic lattice data exceeds a third threshold, sending all types of map data that have changed to the mobile terminal;
wherein the degree of change in the basic lattice data comprises an amount of change in the basic lattice data and/or a rate of change in the basic lattice data.

9. The method for updating the map data according to any one of claims 1 to 8, further comprising:
updating the current map data information in response to map setting change information received from the mobile terminal.

10. The method for updating the map data according to any one of claims 1 to 8, further comprising: acquiring the cached map data information, wherein the step of acquiring the cached map data information comprises:
in response to map data acquisition request information sent by the mobile terminal, storing a snapshot of the current map data information to acquire the cached map data information; and
sending the cached map data information to the mobile terminal;
wherein the cached map data information comprises a snapshot id.

11. A method for updating map data, which is applied to a mobile terminal and comprises:
receiving summary information of map data changes sent via a server side;
sending map data update request information to the server side; and
receiving changed map data sent via the server side, and updating the map data based on the changed map data.

12. The method for updating the map data according to claim 11, wherein
the summary information of map data changes comprises: summarized information of the summary information of the changed map data; and
the map data update request information comprises a type of map data to be updated, and the type of map data to be updated is one or more of the plurality of pieces of the summary information.

13. The method for updating the map data according to claim 12, wherein,
in a case where the type of map data to be updated comprises path data, the map data update request information is sent via an http interface, and the map data update request information comprises a starting point of a path change; and/or
the map data update request information is sent every time interval; and/or
the map data change request information is sent every time interval.

14. The method for updating the map data according to claim 12, wherein the step of receiving the changed map data comprises:
in a case where the changed map data being received is path data, determining the number of times the data is received;
in a case where the number of times the data is received reaches first number information, stopping receiving the path data; and/or
in a case where the changed map data being received is obstacle data, determining the number of times the data is received; and
in a case where the number of times the data is received reaches second number information, stopping receiving the obstacle data.

15. The method for updating the map data according to claim 12, further comprising:
sending map data acquisition request information to the server side;
receiving cached map data information sent via the server side; and
parsing and displaying the cached map data information;
wherein the cached map data information comprises a snapshot id.

16. A server, comprising:
a memory, configured to store a computer program therein; and
a processor, configured to execute the computer program;
wherein the computer program, when executed by the processor, implements the method for updating the map data according to any one of claims 1 to 10.

17. A mobile terminal, comprising:
a memory, configured to store a computer program therein; and
a processor, configured to execute the computer program;
wherein the computer program, when executed by the processor, implements the method for updating the map data according to any one of claims 11 to 16.

18. A computer-readable storage medium, wherein,
the computer-readable storage medium stores a computer program for implementing the method for updating the map data according to any one of claims 1 to 10 and/or implementing the method for updating the map data according to any one of claims 11 to 15.

19. A cleaning system, comprising:
the server according to claim 16; and/or
the mobile terminal according to claim 17.
